# EUROPEAN PATENT APPLICATION

(11) **EP 3 901 191 A1**
(43) Date of publication of application: **27.10.2021**
(21) Application number: 19897853.8
(22) Date of filing: 11.12.2019
(51) Int. Cl.: C08G 59/24, C08G 59/62, C08K 9/06, C08L 63/00, C08K 3/38

(54) **RESIN COMPOSITION**

(30) Priority: 21.12.2018 JP 2018239970
(71) Applicant: Nitto Shinko Corporation, Sakai-shi, Fukui 910-0381 (JP)
(72) Inventor: TABUCHI, Akihiro, Sakai-shi, Fukui 910-0381 (JP)
(74) Representative: Stolmár & Partner Patentanwälte PartG mbB
(86) International application number: PCT/JP2019/048511
(87) International publication number: WO 2020/129776

(57) **Abstract**

Provided is a resin composition including: an epoxy resin; and a curing agent for the epoxy resin, in which epoxy compounds respectively represented by a general formula (1) below and a general formula (2) below are included as the epoxy resin, and a phenol compound represented by a general formula (3) below is included as the curing agent: 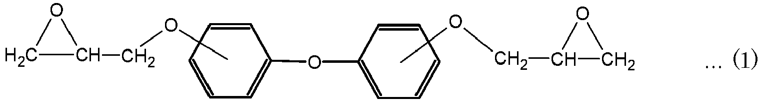 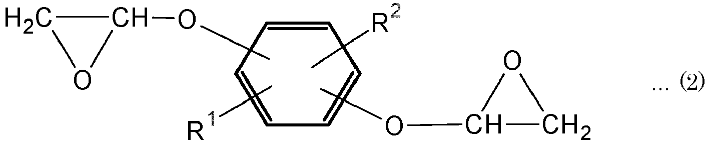 (where R¹ and R² are respectively a methyl group, an ethyl group, a linear or branched propyl group, or an n-, i-, or t-butyl group.) 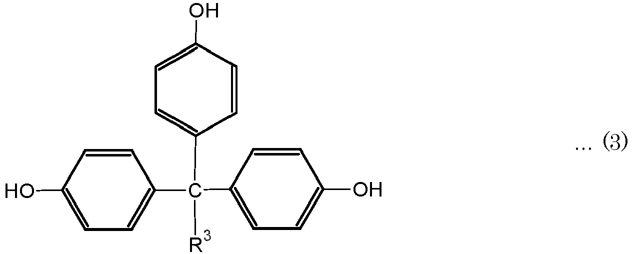 (where R³ is H, CH₃, or C₂H₅.)

## Description

### CROSS-REFERENCE TO RELATED APPLICATION

This application claims priority to Japanese Patent Application No. 2018-239970, the disclosure of which is incorporated herein by reference in its entirety.

### FIELD

The present invention relates to a resin composition.

### BACKGROUND

Conventionally, a resin composition including an epoxy resin and a curing agent for the epoxy resin has been used in the field of electronics.

As the resin composition of this type, disclosed is a resin composition formed and cured into a sheet shape to be used as an insulating sheet (for example, Patent Literature 1).

The resin composition disclosed in Patent Literature 1 includes an organic filler, and can thus increase the thermal conductivity of the insulating sheet.

### CITATION LIST

### Patent Literature

Patent Literature 1: JP 2010-094887 A

### SUMMARY

### Technical Problem

However, no sufficient consideration has been previously given on a method of increasing the thermal conductivity of a cured product of the resin composition other than including an inorganic filler.

It is therefore an object of the present invention to provide a resin composition from which a cured product having relatively high thermal conductivity can be obtained.

### Solution to Problem

In order to solve the above problem, a resin composition according to the present invention is a resin composition including: an epoxy resin; and a curing agent for the epoxy resin, in which epoxy compounds respectively represented by a general formula (1) below and a general formula (2) below are included as the epoxy resin, and a phenol compound represented by a general formula (3) below is included as the curing agent: 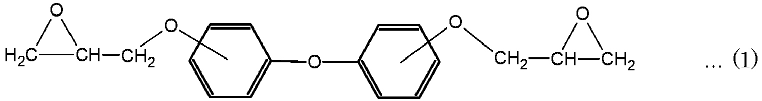 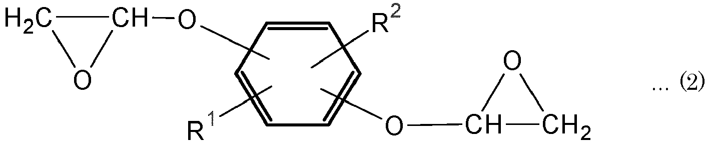 (where R¹ and R² are respectively a methyl group, an ethyl group, a linear or branched propyl group, or an n-, i-, or t-butyl group.) 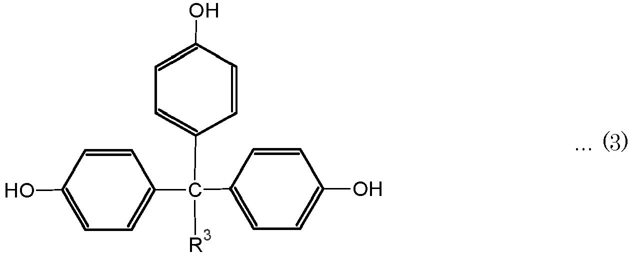 (where R³ is H, CH₃, or C₂H₅.)

The resin composition according to the present invention includes the above compounds, and thus allows a cured product having relatively high thermal conductivity to be obtained.

It is preferable that the resin composition according to the present invention further include an inorganic filler, and that a boron nitride filler be included as the inorganic filler. Such a configuration enables the cured product after being cured to have higher thermal conductivity.

In the resin composition according to the present invention, it is preferable that the inorganic filler be an inorganic filler subjected to surface treatment with a silane coupling agent. Such a configuration can more suppress cohesive failure of the cured product after being cured.

### BRIEF DESCRIPTION OF DRAWINGS

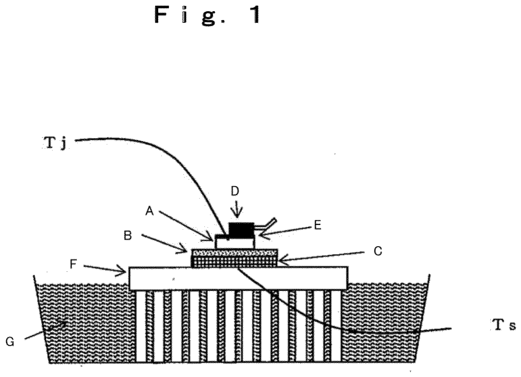

Fig. 1 is a schematic view showing the arrangement for measurement of thermal conductivity.

### DESCRIPTION OF EMBODIMENTS

Hereinafter, one embodiment of a resin composition according to the present invention will be described with reference to the drawings.

The resin composition according to this embodiment is formed into a cured product by a curing reaction. That is, the resin composition according to this embodiment includes a component that forms a cured product. Specifically, the resin composition according to this embodiment includes a polymerizable component that becomes a cured product by polymerization. It is preferable that the resin composition according to this embodiment include an inorganic filler in terms of allowing the cured product to have higher thermal conductivity. The resin composition according to this embodiment may include an additive commonly used as a plastic compounding chemical without impairing the effect of the present invention.

In the resin composition according to this embodiment, the content ratio of the polymerizable component is preferably 10 mass % or more and 70 mass % or less, more preferably 30 mass % or more and 40 mass % or less.

The cured product formed from the resin composition according to this embodiment that has been cured includes preferably 10 volume % or more and 60 volume % or less, more preferably 40 volume % or more and 50 volume % or less, of the inorganic filler when the total volume is 100 volume %. The resin composition according to this embodiment includes preferably 30 mass parts or more and 90 mass parts or less, more preferably 60 mass parts or more and 70 mass parts or less, of the inorganic filler based on 100 mass parts of the polymerizable component. This configuration allows the content ratio of the inorganic filler in the cured product to easily fall within the range of the above volume %.

The resin composition according to this embodiment includes preferably 0.005 mass parts or more and 0.1 mass parts or less, more preferably 0.01 mass parts or more and 0.03 mass parts or less, of the additive based on 100 mass parts of the polymerizable component.

The resin composition according to this embodiment includes, as the polymerizable component, an epoxy resin and a curing agent for the epoxy resin.

The polymerizable component includes preferably 80 mass % or more and 100 mass % or less, more preferably 90 mass % or more and 100 mass % or less, of the epoxy resin and the curing agent in total.

The equivalent ratio of the curing agent to the epoxy resin is preferably 1/2 or more and 2/1 or less, more preferably 2/3 or more and 3/2 or less.

The resin composition according to this embodiment includes, as the epoxy resin, an epoxy compound represented by a formula (1) below and an epoxy compound represented by a formula (2) below, and includes, as the curing agent, a phenol compound represented by a general formula (3) below. With this configuration, the resin composition according to this embodiment enables a cured product having relatively high thermal conductivity to be obtained. 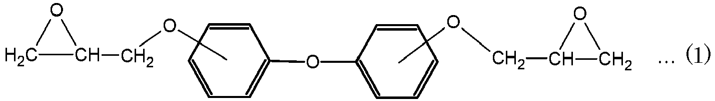 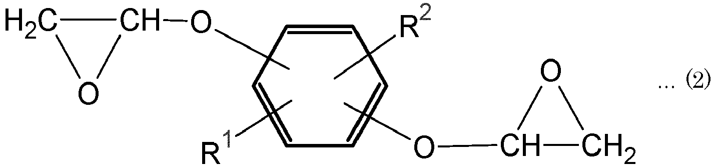 (where R¹ and R² are respectively a methyl group, an ethyl group, a linear or branched propyl group, or an n-, i-, or t-butyl group.)

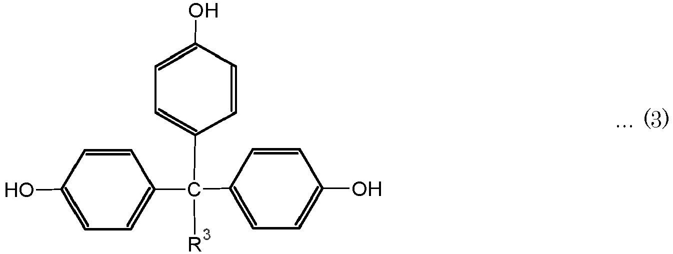

### (where R³ is H, CH₃, or C₂H₅.)

In the epoxy resin, the mass ratio of the epoxy compound represented by the general formula (2) above to the epoxy compound represented by the general formula (1) above is preferably 0.01 or more and 0.5 or less, more preferably 0.1 or more and 0.3 or less. This configuration allows the cured product to exert its better thermal conductivity.

The ratio of the epoxy compound represented by the general formula (1) above to the epoxy resin is preferably 1 mass % or more and 100 mass % or less, more preferably 10 mass % or more and 80 mass % or less, still more preferably 30 mass % or more and 70 mass % or less. In the epoxy resin, it is preferable that the content ratio of the epoxy compound represented by the general formula (1) above be highest among the content ratios of the respective components included in the epoxy resin. This configuration allows the cured product to exert its better thermal conductivity.

The ratio of the epoxy compound represented by the general formula (2) above to the epoxy resin is preferably 1 mass % or more and 10 mass % or less, more preferably 2 mass % or more and 8 mass % or less, still more preferably 3 mass % or more and 7 mass % or less. In the epoxy resin, the mass of the epoxy compound represented by the general formula (2) above is preferably smaller than the mass of the epoxy compound represented by the general formula (1) above. This configuration allows the cured product to exert its better thermal conductivity.

In the above epoxy resin, the mass ratio of the epoxy compound represented by the general formula (2) above to the epoxy compound represented by the general formula (1) above [general formula (2)/general formula (1)] is preferably 0.05 or more and 0.5 or less. This configuration allows the cured product to exert its better thermal conductivity.

The ratio of the phenol compound represented by the general formula (3) above to the curing agent is preferably 50 mass % or more and 100 mass % or less, more preferably 70 mass % or more and 100 mass % or less, still more preferably 80 mass % or more and 100 mass % or less. In the curing agent, it is preferable that the content ratio of the phenol compound represented by the general formula (3) above be highest among the content ratios of the components included in the curing agent. This configuration allows the cured product to exert its better thermal conductivity.

Examples of the epoxy compound represented by the general formula (1) above include an epoxy compound represented by a formula (1a) below and an epoxy compound represented by a formula (1b) below:

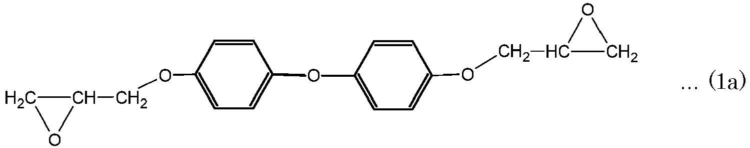

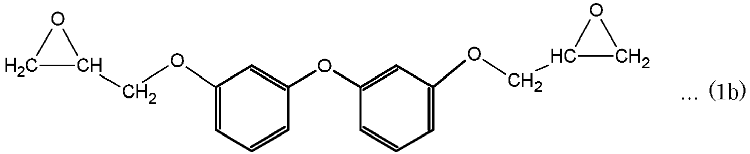

The epoxy compound represented by the formula (1a) above can be obtained by causing 4,4'-oxybisphenol to react with 1-chloro-2,3-epoxypropane. The epoxy compound represented by the formula (1b) above can be obtained by causing 3,3'-oxybisphenol to react with 1-chloro-2,3-epoxypropane.

Examples of the epoxy compound represented by the general formula (2) include an epoxy compound represented by a formula (2a) below, an epoxy compound represented by a formula (2b) below, and an epoxy compound represented by a formula (2c) below:

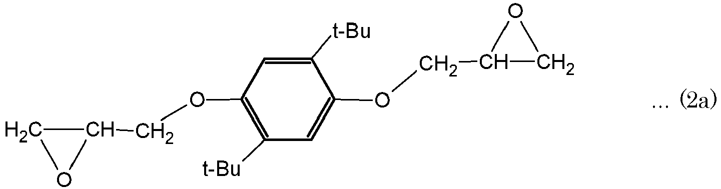

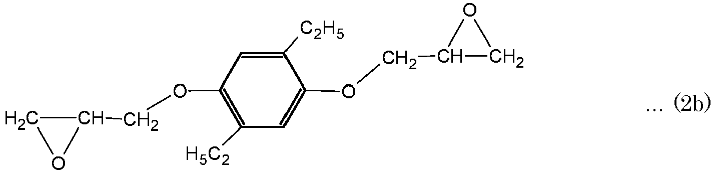

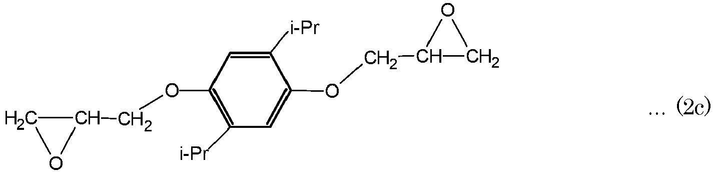

The epoxy compound represented by the formula (2a) above can be obtained by causing 2,5-di-tert-butylhydroquinone to react with 1-chloro-2,3-epoxypropane. The epoxy compound represented by the formula (2b) above can be obtained by causing 2,5-di-ethylhydroquinone to react with 1-chloro-2,3-epoxypropane. The epoxy compound represented by the formula (2c) above can be obtained by causing 2,5-di-iso-propylhydroquinone to react with 1-chloro-2,3-epoxypropane.

Examples of the epoxy resin other than the epoxy compounds respectively represented by the general formula (1) and general formula (2) above include a bisphenol A epoxy resin and a novolac epoxy resin. It is preferable that the epoxy resin include only the epoxy compounds represented by the general formula (1) and general formula (2) above. As an epoxy resin such as the epoxy compounds represented by the formula (1) and formula (2) above, a commercially available product can be used.

As the curing agent, a phenol compound represented by a formula (3a) below is preferable among any phenol compound represented by the general formula (3):

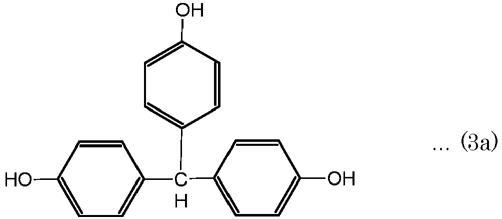

The curing agent preferably includes only the phenol compound represented by the formula (3), more preferably includes only the phenol compound represented by the formula (3a) above.

As a curing agent such as the phenol compound represented by the general formula (3), a commercially available product can be used.

Examples of other curing agents include an amine-based curing agent, a phenol-based curing agent other than the phenol compound represented by the general formula (3), and an acid anhydride. Examples of the amine-based curing agent include diaminodiphenylsulfone, dicyandiamide, diaminodiphenylmethane, and triethylenetetramine. Examples of the phenolic curing agent other than that represented by the general formula (3) include a phenol novolac resin, an aralkyl phenol resin, a dicyclopentadiene modified phenol resin, a naphthalene-type phenol resin, and a bisphenol phenol resin. Examples of the acid anhydride include phthalic anhydride, trimellitic anhydride, and maleic anhydride.

Examples of the inorganic filler include a boron nitride filler, an aluminum nitride filler, a silica nitride filler, a gallium nitride filler, an alumina filler, a silicon carbide filler, a silicon dioxide filler, a magnesium oxide filler, and a diamond filler.

As the inorganic filler, the boron nitride filler is preferable in terms of having excellent thermal conductivity. The inorganic filler includes preferably 90 mass % or more of the boron nitride filler, more preferably includes 95 mass % or more of the boron nitride filler. The thermal conductivity of the cured product can be adjusted by changing the mixing ratio of the boron nitride filler.

It is preferable that the inorganic filler be an inorganic filler subjected to surface treatment with a silane coupling agent in order to increase its affinity for the resin.

As the silane coupling agent, for example 3-glydoxypropyltrimethoxysilane is preferable. As the silane coupling agent, a commercially available product can be used.

Examples of the additive that can be included in the resin composition of this embodiment include a curing accelerator that accelerates a curing reaction between the epoxy resin and the curing agent. Further, examples thereof include a dispersant, a tackifier, an antiaging agent, an antioxidant, a processing aid, a stabilizer, a defoamer, a flame retardant, a thickener, and a pigment.

Examples of the curing accelerator include tetraphenylphosphonium tetraphenylborate, imidazoles, triphenylphosphate (TPP), and an amine-based curing accelerator. Examples of the amine-based curing accelerator include boron trifluoride monoethylamine.

The resin composition according to this embodiment includes preferably 0.5 mass part or more and 1.5 mass parts or less, more preferably 0.5 mass part or more and 5.0 mass parts or less, of the curing accelerator based on 100 mass parts of the total of the epoxy resin and the curing agent.

The polymerizable component (e.g., epoxy resin) is cured into a cured product (cured resin) by polymerization.

The resin composition according to this embodiment may be cured into a sheet shape to be used for a metal base circuit board. The metal base circuit board may be formed, for example, by bonding a circuit layer to the sheet-shaped cured product of the resin composition. The thus configured metal base circuit board having the sheet-shaped cured product of the resin composition is also excellent in thermal conductivity.

Further, the resin composition according to this embodiment may be formed and cured into a sheet shape to be used for a power module. The power module may be formed, for example, by mounting heating elements such as semiconductor chips or power ICs on the circuit layer of the metal base circuit board, once sealing these elements with silicone gel, and further performing resin molding on the silicone gel. The thus configured power module having the sheet-shaped cured product of the resin composition is also excellent in thermal conductivity.

The resin composition of this embodiment has been described as above, but the present invention is not limited to the resin composition described above. That is, various forms used in the resin compositions generally applicable may be employed without impairing the effect of the present invention.

### EXAMPLES

Next, the present invention will be described in more detail by way of experimental examples, without limitation thereto.

The resin composition was produced in the following manner. Then, the produced resin composition was cured, and an evaluation test for thermal conductivity and the like was performed on the cured product.

### (Example 1)

A resin composition was produced by mixing the epoxy resin, the curing agent, the curing accelerator, and the inorganic filler below:
Epoxy resin:
Epoxy compound represented by the formula (1a) above
(Polycondensate of 4,4-dihydroxydiphenyl ether and 1-chloro-2,3-epoxypropane) (product name "YSLV-80DE" manufactured by NIPPON STEEL Chemical & Material CO., LTD.)
Epoxy compound represented by the formula (2a) above
(Chemical name: 2,5-di-t-butyl hydroquinone diglycidyl ether) (product name "YDC-1312" manufactured by NIPPON STEEL Chemical & Material CO., LTD.)
Curing agent: Phenol compound represented by the formula (3a) above
(Chemical name: 4,4',4"-methylidine trisphenol) (product name "Tris P-PHBA-S" manufactured by Honshu Chemical Industry Co., Ltd.)
Curing accelerator: Tetraphenylphosphonium tetraphenylborate (TPP-K (registered trademark), manufactured by HOKKO CHEMICAL INDUSTRY CO., LTD.)
Inorganic filler: Boron nitride filler (BN filler)

The epoxy resin and the curing agent were mixed into the resin composition at an equivalent ratio of 1:1. Further, 0.01 mass part of the curing accelerator was mixed into the resin composition based on 100 mass parts of the total of the epoxy resin and the curing agent. Furthermore, the inorganic filler was mixed into the resin composition so that the content of the inorganic filler was 48 volume % when the cured product obtained by curing the resin composition was 100 volume %. The resin composition included, as the polymerizable components, 34.7 mass % of the epoxy resin and 0.3 mass % of the curing agent. That is, the resin composition included 35.0 mass % of the polymerizable components (epoxy resin and curing agent) to be formed into a cured product. Further, the resin composition included 65 mass parts of the inorganic filler based on 100 mass parts of the polymerizable components (epoxy resin and curing agent).

### (Example 2)

A resin composition was produced in the same manner as in Example 1, except that, as the phenol compound represented by the general formula (3), a phenol compound in which R³ is CH₃ was used in substitution for a phenol compound in which R³ is H.

### (Comparative Example 1)

A resin composition was produced in the same manner as in Example 1, except that a curing agent of a formula (4) below was used as the curing agent.

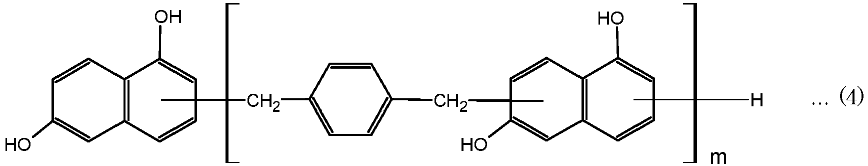

### (where, in the formula (4), m is 1 or more.)

### (Comparative Example 2)

A resin composition was produced in the same manner as in Example 1, except that an epoxy compound represented by a formula (5) below was used as the epoxy resin, and the curing agent of the formula (4) was used as the curing agent.

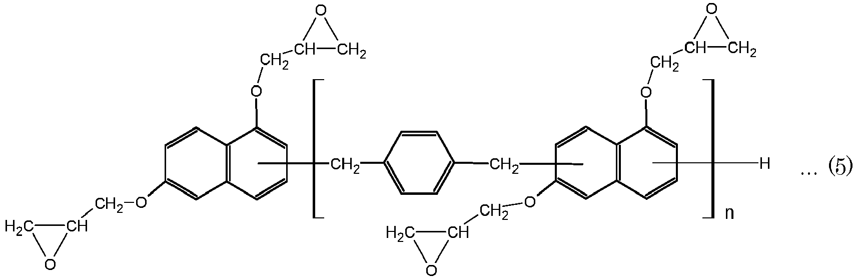

### (where, in the formula (5), n is 1 or more.)

### (Comparative Example 3)

A resin composition was produced in the same manner as in Example 1, except that the epoxy compound represented by the formula (5) above was used as the epoxy resin.

An evaluation test was performed as follows, using each of the produced compositions. The results are shown in Table 1.

### <Peel test (adhesion test)>

The resin composition of each of Examples and Comparative Examples was applied to one side of each of electrolytic copper foils (each having a thickness of 35 pm) to prepare two sheets each having a resin layer (thickness of 145 µm). Next, the two sheets were hot-pressed (3.0 MPa, 120 °C, 20 mins) to bond the resin layers to each other, and one copper foil was peeled off from the back side of one of the sheets. Then, an aluminum plate was placed on the surface of the sheet from which the copper foil had been peeled off, and was subjected to hot-pressing (2.0 MPa, 120 °C, 20 mins) to attach the sheet to the aluminum plate, and then the copper foil was further peeled off from the other sheet to obtain a semi-cured sheet. Next, an adherend (copper foil, 1 oz) was laminated on this semi-cured sheet to integrate the resin layer and the adherend together by hot-pressing (2.0 MPa, 180 °C, 120 mins). After the resin layer was sufficiently cured, the laminated body was cut into a 20 mm × 10mm piece and the adherend of the cut piece was processed (etched) to a width of 10 mm to make a test piece for the peel test. The test piece was subjected to a 90° peel test at a peeling speed of 50 mm/min, and the degree of adhesion between the adherend and the resin layer was evaluated by adhesive force.

### <Thermal conductivity>

The thermal conductivity was measured by the transistor method. Details of the measurement method will be described below with reference to Fig. 1. The resin composition of each of Examples and Comparative Examples was applied to one side of each of electrolytic copper foils A (each having a thickness of 105 pm) to prepare two sheets each having a resin layer B (thickness of 100 µm). Next, the two sheets were hot-pressed (3.0 MPa, 120 °C, 20 mins) to bond the resin layers B to each other, and one copper foil A was peeled off from the back side of one of the sheets. Then, an aluminum plate C was placed on the surface of the sheet from which the copper foil A had been peeled off, and was subjected to hot-pressing (2.0 MPa, 180 °C, 120 mins) to attach the sheet to the aluminum plate C, in order to obtain a thermally conductive sheet in which the resin layer B had been sufficiently heat-cured. The copper foil A in this thermally conductive sheet was etched at a size of 10 × 15 mm, and a transistor D (TO-220 type "C2233") was fixed to the etched portion by a solder E. Further, an appropriate amount of "1 W/m • K heat radiation grease" was applied to the aluminum plate C, and a heat sink F was attached to the aluminum plate C. The heat sink F was partially soaked in cooling water G (20 ± 3 °C). The voltage and current applied to the transistor D were adjusted so that the transistor D consumed 10 to 40 W of power. Then, the temperature was measured with thermocouples respectively mounted directly below the heat dissipation portion of the transistor D and mounted on the aluminum plate C. The temperature (Ts) of the aluminum plate C was subtracted from the temperature (Tj) directly below the heat dissipation portion of the transistor D, which was further divided by power. The reciprocal of the obtained value was used to calculate the thermal conductivity.

**Table 1**

| | Adhesive force (N/cm) | Thermal conductivity (W/(m • K)) |
|---|---|---|
| Example 1 | 2.5 | 14 |
| Example 2 | 2.5 | 14 |
| C. Example 1 | 2.5 | 10 |
| C. Example 2 | 2.5 | 12 |
| C. Example 3 | 2.5 | 10 |

As shown in Table 1, in the resin compositions of Examples 1 and 2, which are within the scope of the present invention, the cured products had higher thermal conductivity than that of the resin compositions of Comparative Examples 1 to 3 each having substantially the same adhesive force as that of Examples 1 and 2.

### Industrial Applicability

The resin composition of the present invention is suitably used, for example, to allow the cured product to be used as an electrically insulating sheet material.

### REFERENCE SIGNS LIST

- A:: Copper foil
- B:: Resin layer
- C:: Aluminum plate
- D:: Transistor
- E:: Solder
- F:: Heat sink
- G:: Cooling water

## Claims

1. A resin composition comprising:
an epoxy resin; and
a curing agent for the epoxy resin, wherein
epoxy compounds respectively represented by a general formula (1) below and a general formula (2) below are included as the epoxy resin, and
a phenol compound represented by a general formula (3) below is included as the curing agent: 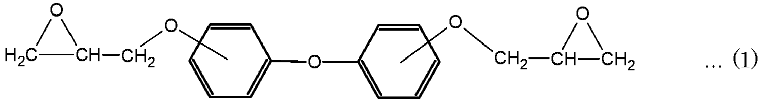 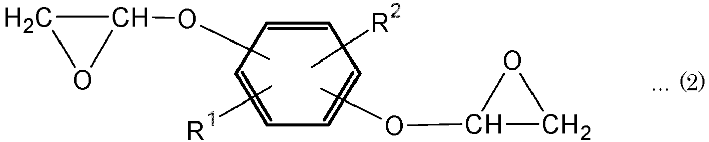 (where R¹ and R² are respectively a methyl group, an ethyl group, a linear or branched propyl group, or an n-, i-, or t-butyl group.) 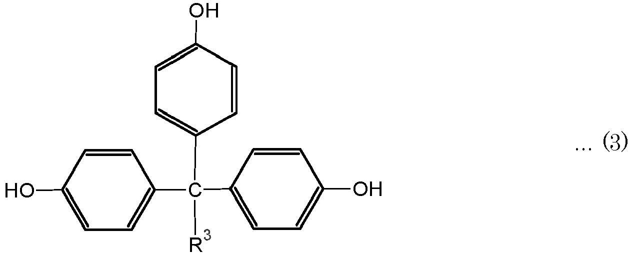 (where R³ is H, CH₃, or C₂H₅.)

2. The resin composition according to claim 1, further comprising an inorganic filler.

3. The resin composition according to claim 2, wherein a boron nitride filler is included as the inorganic filler.

4. The resin composition according to claim 2 or 3, wherein the inorganic filler is an inorganic filler subjected to surface treatment with a silane coupling agent.
